# EUROPÄISCHE PATENTANMELDUNG

(11) **EP 2 740 913 A1**
(43) Veröffentlichungstag der Anmeldung: **11.06.2014**
(21) Anmeldenummer: 13005716.9
(22) Anmeldetag: 09.12.2013
(51) Int. Cl.: F01N 3/10, F01N 3/022, F01N 3/20, F01N 3/035, F01N 3/28, F01N 3/06, F01N 3/033

(54) **Abgasnachbehandlungssystem**

(30) Priorität: 10.12.2012 DE 202012011813 U; 18.03.2013 DE 202013002596 U
(71) Anmelder: Liebherr Machines Bulle SA, 1630 Bulle (CH)
(72) Erfinder: Vonarb, Régis, Dr., 1635 La-Tour-de-Trême (CH); Philipp, Thorben, 1630 Bulle (CH); Hohl, Yves, 1468 Cheyres (CH); Federle, Phillip, 89143 Blaubeuren (DE)
(74) Vertreter: Laufhütte, Dieter

(57) **Zusammenfassung**

Abgasnachbehandlungssystem zur Reduzierung der im Abgas von Verbrennungsmotoren, vorzugsweise Dieselmotoren, vorhandenen Schadstoffe mit einem gas- und flüssigkeitsdichten Gehäuse mit mindestens einem Einlaß und mindestens einem Auslaß, wobei im Gehäuse Gasführungselemente angeordnet sind und wobei das Gehäuse mindestens eine Kammer umgibt, in der ein Katalysatormaterial und/oder ein Partikelfiltermaterial enthalten ist, wobei diese funkenfangende und/oder funkenlöschende Elemente aufweisen.

## Beschreibung

Die Erfindung betrifft ein Abgasnachbehandlungssystem zur Reduzierung der im Abgas von Verbrennungsmotoren, vorzugsweise Dieselmotoren, vorhandenen Schadstoffe.

Abgasnachbehandlungssysteme für Dieselmotoren sind bereits hinlänglich bekannt. In der Fahrzeugtechnik wird in Abgasnachbehandlungssystemen häufig das sogenannte SCR-Verfahren angewendet, d.h. die selektive katalytische Reduktion, um die Stickoxidemissionen zu senken. Durch eine selektive katalytische Reduktion werden Stickoxide aus dem Abgas mit einem hohen Wirkungsgrad entfernt. Der Einbau eines SCR-Systems zur Stickoxidminderung ermöglicht es, den Motor in verbrauchsgünstigen Betriebspunkten zu betreiben.

Üblicherweise besteht das Abgasnachbehandlungssystem aus einem gas- und flüssigkeitsdichten Gehäuse mit einem Einlass und einem Auslass, wobei im Gehäuse Gasführungselemente angeordnet sind. Das Gehäuse umgibt mindestens eine Kammer, in der ein Katalysatormaterial vorhanden ist. Grundsätzlich sind auch Abgasnachbehandlungssysteme entsprechend aufgebaut, die anstelle des Katalysatormaterials ein Partikelfiltermaterial enthalten. Weiterhin können die Abgasnachbehandlungssysteme zweistufig aufgebaut sein. In einer ersten Stufe wird das Abgas über ein Katalysatormaterial geführt. Anschließend tritt das Abgas in einen im Abgasnachbehandlungssystem enthaltenen Partikelfilter ein. Es sind auch Abgasnachbehandlungssysteme als einstufige Systeme bekannt, bei denen lediglich Partikelfilter eingesetzt werden.

Bei bekannten Abgasnachbehandlungssystemen war es bislang notwendig, zusätzlich nach dem Abgasnachbehandlungssystem noch einen Funkenfänger anzubauen. Dieser zusätzliche Funkenfänger ist ein zusätzlich vorzusehendes Bauteil, durch das der Abgasstrom nach Durchlaufen des Abgasnachbehandlungssystems hindurch geführt werden muss. Dieses Hindurchführen durch den zusätzlich vorgesehenen Funkenfänger führt zu einem höheren Gegendruck und damit zu einem höheren Kraftstoffverbrauch. Weiterhin ist das Gewicht des gesamten Abgasnachbehandlungssystems erhöht.

Aufgabe der vorliegenden Erfindung ist es, ein Abgasnachbehandlungssystem zur Reduzierung der im Abgas von Verbrennungsmotoren vorhandenen Schadstoffe derart zu verbessern, dass das Vorsehen eines zusätzlichen Funkenfängers erspart wird.

Erfindungsgemäß wird diese Aufgabe bei einem Abgasnachbehandlungssystem nach dem Oberbegriff des Anspruchs 1 dadurch gelöst, dass die Gasführungselemente turbulenzerzeugende Elemente aufweisen. Durch die turbulenzerzeugenden Elemente wird innerhalb des Abgasnachbehandlungssystems eine funkenlöschende Strömungsoptimierung der durch das Abgasnachbehandlungssystem geführten Abgase erreicht. Durch die erhöhte Turbulenz werden die Funkenteilchen im Abgasstrom mit den jeweiligen Wandungen in Kontakt gebracht, um hier zu erreichen, dass sie zerkleinert und abgekühlt werden. Die Funken werden also durch mindestens einen Aufprall zerkleinert. Durch den Aufprall kühlen die Funken darüber hinaus ab. Darüber hinaus wird aufgrund der turbulenten Strömung die Verweildauer der Funken in der Abgasnachhandlungsanlage erhöht. Während der Durchströmung durch das Abgasnachbehandlungssystem kommen die Funken mit kälterem Abgas und der kälteren Trennwände in Kontakt und glühen aus. Bevorzugte Ausgestaltungen der Erfindung ergeben sich aus den sich an den Hauptanspruch anschließenden Unteransprüchen.

Demnach werden die Gasführungselemente durch parallel verlaufende Trennwände gebildet, die das Abgas in mehrere Teilströme aufteilt.

Die turbulenzerzeugenden Elemente können vorteilhaft in den Trennwänden vorgesehene Durchbrüche oder Mulden sein oder zwischen den Trennwänden angeordnete Stromstörer, Prallstellen oder zusätzliche Leitbleche. Die Leitbleche können dazu dienen, den die Funken mit sich führenden Abgasstrom an eine Wandung zu leiten, um so die festen Teilchen durch den Wandkontakt gezielt zu zerkleinern und abzukühlen.

Vorteilhaft kann das Katalysatormaterial aus einem Katalysatorträgermaterial mit einer katalytisch-chemischen Oberfläche oder Beschichtung bestehen.

Gemäß einer besonders vorteilhaften Ausgestaltung der Erfindung können mehrere Kammern mit Katalysatoren zur selektiven katalytischen Reduktion hintereinander geschaltet sein.

Aufgrund der hohen auftretenden Temperaturen bestehen die Trennwände vorteilhaft aus Metallblechen oder Metallfolien, bzw. Keramikelementen oder Kombinationen der vorgenannten Werkstoffe.

Gemäß einem weiteren Vorteil der Erfindung kann zusätzlich mindestens ein Schalldämmelement im Gehäuse des Abgasnachbehandlungssystems integriert sein.

Bei einer weiteren vorteilhaften Lösung der Erfindung wird in einem im Abgasnachbehandlungssystem vorgesehenen Partikelfilter die Porosität der Wandungen, durch die das Abgas geführt wird, so gewählt, dass ebventuell noch vorhandene Funkenteilchen abfiltriert werden.

Gemäß einer alternativen Lösung der Erfindung wird das Abgasnachbehandlungssystem einstufig ausgeführt, wobei hier lediglich ein Partikelfilter enthalten ist, bei dem die Porösität der Wandungen, durch die das Abgas geführt wird, so gewählt ist, dass die in das Abgasnachbehandlungssystem eintretenden Funkenteilchen abfiltriert werden. Bei dieser Ausführung werden also sämtliche in das Abgasnachbehandlungssystem eintretenden Funkenteilchen vollständig vom Partikelfilter abfiltriert.

Weitere Merkmale, Einzelheiten und Vorteile der Erfindung werden anhand eines in den Zeichnungen dargestellten Ausführungsbeispiels näher erläutert. Es zeigen:
- Figur 1:: eine teilweise aufgeschnittene Darstellung eines Abgasnachbehandlungssystems gemäß der vorliegenden Erfindung,
- Figur 2:: ein Detail des Abgasnachbehandlungssystems nach Figur 1,
- Figur 3:: eine Darstellung entsprechend Figur 2 mit einem eingezeichneten Strömungsverlauf des Abgases und
- Figur 4:: eine perspektivische Darstellung eines Teils des Abgasnachbehandlungssystems gemäß Figur 1,
- Figur 5:: eine schematische Darstellung eines weiteren Abgasnachbehandlungssystems gemäß der vorliegenden Erfindung,
- Figur. 6: ein Detail des Abgasnachbehandlungssystems nach Figur 5 und
- Figur 7:: eine schematische Darstellung eines weiteren Details der Abgasnachbehandlungssystems nach Figur 5

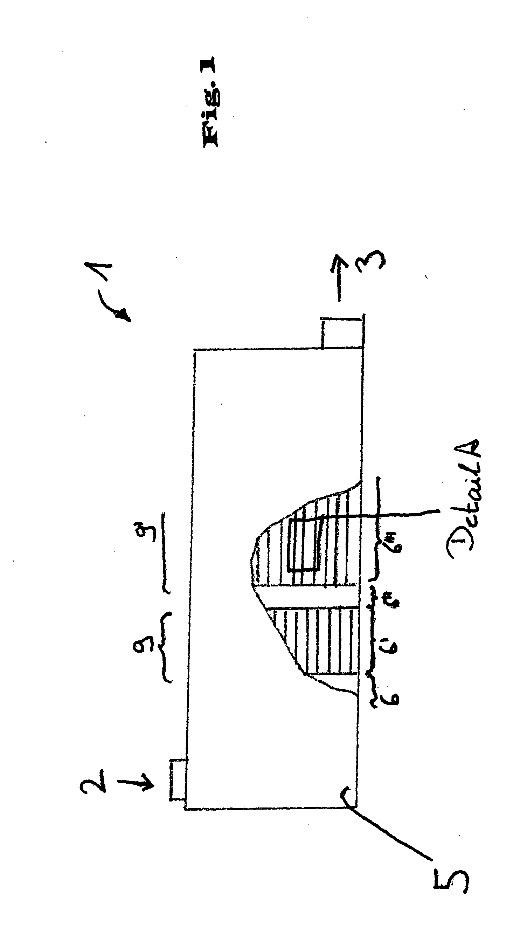

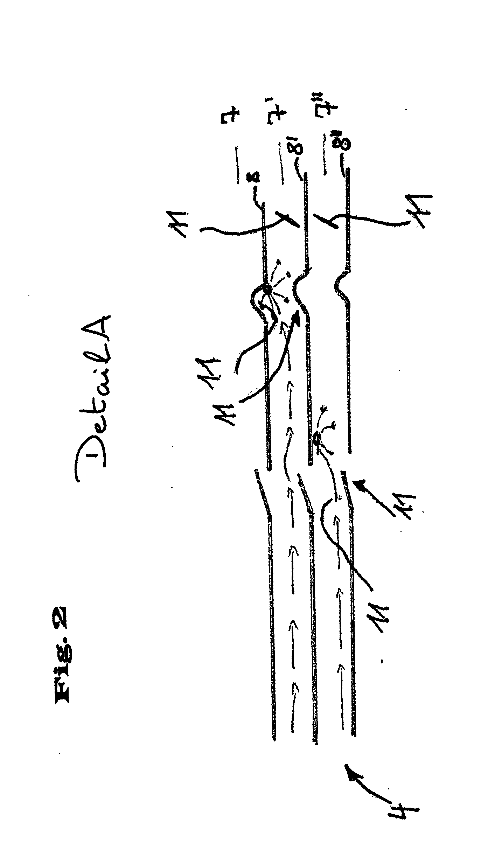

In Figur 1 ist ein Abgasnachbehandlungssystem 1 zur Reduzierung der im Abgas von Dieselmotoren vorhandenen Schadstoffe gezeigt. Dieses Abgasnachbehandlungssystem 1 weist ein Gehäuse 5 auf, das einen Einlass 2 und einen Auslass 3 aufweist. In dem Einlass 2 wird das abzureinigende Abgas eines Dieselmotors eingeleitet. Das abgereinigte Abgas tritt aus dem Auslass 3 aus. Im Gehäuse 5 sind mehrere Kammern 6, 6' und 6" ausgebildet, wobei mehrere Kammern 6, 6' und6" jeweils einen Abschnitt bilden können. Des Weiteren sind im Gehäuse Gasführungselemente 4 angeordnet, wie sie aus dem Detail A, das in Figur 2 dargestellt ist, ergibt. Die Gasführungselemente 4 weisen Trennwände 8, 8' und 8" auf, die den Abgasstrom in Teilströme 7, 7' und 7" aufteilen. Üblicherweise bestehen die Trennwände 8, 8' und 8" aus Metall. Sie können allerdings auch aus Keramik bestehen, da auch Keramik den hohen Abgastemperaturen standhält.

Die Reinigung der Abgase selbst erfolgt mindestens in einem Element 9, 9', welche jeweils aus einer oder mehreren Kammern 6, 6', 6" besteht. In dem jeweiligen Element 9 bzw. 9' kann die Reinigung der Abgase durch eine chemische Umwandlung und/oder durch Filtern erfolgen. In einem Abschnitt im hier dargestellten Ausführungsbeispiel kommt der Abgasstrom mit einer katalytisch-chemisch aktiven Oberfläche oder Beschichtung (den sogenannten Washcoat 10) in Berührung. Diese Oberfläche kann die eines Reduktions- oder Oxidationskatalysators darstellen.

Die Sicherstellung der Funkenfreiheit der aus dem Auslass 3 austretenden Gase kann durch Funkenlöschen oder Funkenfliehkraft abscheidende Methoden erfolgen. Hierzu können die funkenlöschenden und/oder funkenfangenden Eigenschaften der Elemente 9, 9' herangezogen werden.

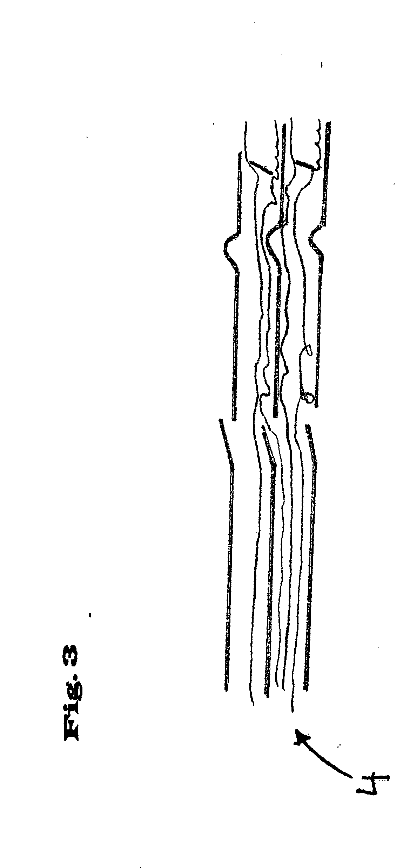

Nach der vorliegenden Erfindung werden allerdings die Teilströme 7, 7' und 7" durch geeignete Maßnahmen turbulent verwirbelt. Diese Turbulenzerzeugung erfolgt durch turbulenzerzeugende Elemente 11. Die turbulenzerzeugenden Elemente 11 können, wie in den Figuren 2 und 3 dargestellt, Durchbrüche, Mulden oder Prallstellen sein. Gegebenenfalls können auch gebogene Kanäle, strukturierte Kanalwände und Strömungsumlenkungen vorgesehen sein. In der Figur 3 wird die Strömungslinie der Abgasströmung angedeutet, in der die erzeugten Turbulenzen durch den Verlauf der Stromlinien angedeutet sind. Um hier möglichst frühzeitig turbulente Strömungen zu erzeugen, wird eine möglichst hohe Strömungsgeschwindigkeit erzeugt (hohe Reynoldszahl).

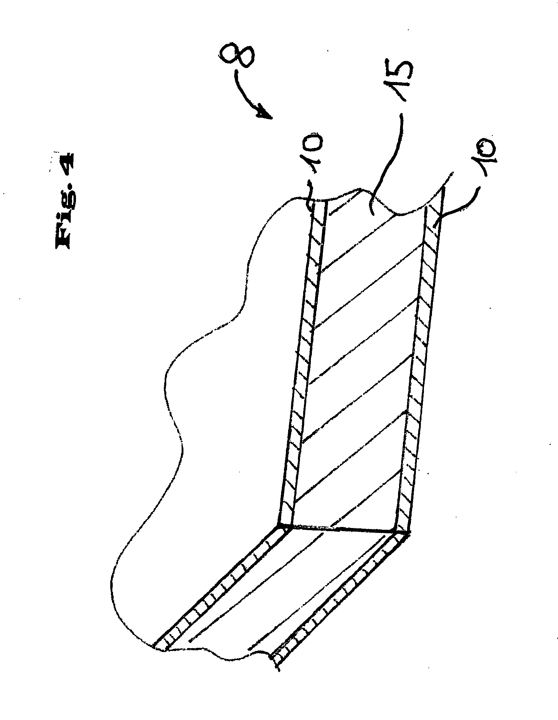

In der Figur 4 ist eine Ausführungsform gezeigt, in der die Trennwände 8 aus einem Kern- bzw. Grundmaterial 15 bestehen, welche mit einer Oberflächenbeschichtung, einen sogenannten Washcoat 10 überzogen sind. Dies stellt eine vorteilhafte Ausführungsvariante der Erfindung dar.

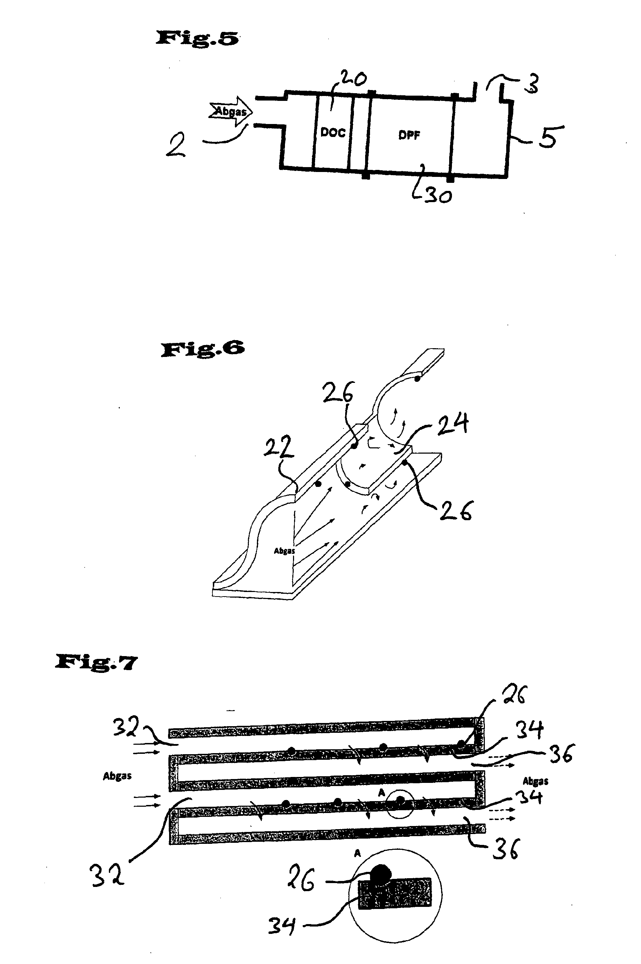

Ein zweites Ausführungsbeispiel des Abgasnachbehandlungssystems 1 zur Reduzierung der im Abgas von Dieselmotoren vorhandenen Schadstoffen ist in den Figuren 5 bis 7 gezeigt.

Die Figur 5 zeigt ebenfalls ein Gehäuse 5, in welchem wiederum ein Einlass 2 und ein Auslass 3 vorgesehen ist. In den Einlass 2 wird das abzureinigende Abgas des Dieselmotors eingeleitet, während das abgereinigte Abgas aus dem Auslass 3 austritt. In der hier dargestellten Ausführungsvariante sind zwei Bereiche enthalten. Im ersten Bereich 20 ist ein Dieseloxidationskatalysator aufgenommen, der ein Metalitsubstrat enthält.

Der zweite Bereich enthält einen Dieselpartikelfilter 30 und besteht im Wesentlichen aus einem Keramiksubstrat.

Der erste Bereich in dieser Ausführungsvariante des Abgasnachbehandlungssystems 1 weist turbulenzerzeugende Elemente auf, wie sie schon anhand des ersten Ausführungsbeispiels erläutert wurden. Diese sind hier in der perspektivischen Detaildarstellung nach Figur 6 gezeigt. Hier sind Wandungen 22, die turbulenzerzeugende Elemente 24 enthalten, dargestellt, über die die gesamte Strömung in Turbulenz versetzt wird. Hierdurch können die Funkenteilchen 26 an der Wandung abgelagert werden, wodurch sie verkleinert und abgekühlt werden und so erlöschen.

Soweit in dem aus dem Bereich 20 austretenden behandelten Abgasluftstrom noch Funkenteilchen enthalten sein sollten, treten diese mit dem Abgasstrom in den Bereich 30 ein, der prinzipiell entsprechend der Figur 7 aufgebaut ist. Dort strömt das Abgas in die geschlossenen Kanäle 32 ein und tritt durch die porösen Wandungen 34 hindurch. Beim Durchtritt durch die porösen Wandungen werden die Rußpartikel, die üblicherweise bis zu 23 nm Durchmesser aufweisen, abfiltriert. Aufgrund dieses Filtrationseffektes werden auch eventuell noch vorhandene Funkenteilchen abfiltriert, sodass hier sicher verhindert wird, dass diese mit dem aus den Kanälen 36 austretenden Abgas mitgeführt werden. Im Detail A der Figur 7 ist schematisch gezeigt, wie ein Funkenteilchen 26 an der porösen Wand 34 abgeschieden wird.

## Patentansprüche

1. Abgasnachbehandlungssystem zur Reduzierung der im Abgas von Verbrennungsmotoren, vorzugsweise Dieselmotoren, vorhandenen Schadstoffe mit einem gas- und flüssigkeitsdichten Gehäuse mit mindestens einem Einlaß und mindestens einem Auslaß, wobei im Gehäuse Gasführungselemente angeordnet sind und wobei das Gehäuse mindestens eine Kammer umgibt, in der ein Katalysatormaterial und/oder ein Partikelfiltermaterial enthalten ist,
**dadurch gekennzeichnet,**
**dass** diese funkenfangende und/oder funkenlöschende Elemente aufweisen.

2. Abgasnachbehandlungssystem nach Anspruch 1, **dadurch gekennzeichnet, dass** die Gasführungselemente durch parallel verlaufende Trennwände gebildet sind, die das Abgas in mehrere Teilströme aufteilt.

3. Abgasnachbehandlungssystem nach Anspruch 2, **dadurch gekennzeichnet, dass** die turbulenzerzeugenden Elemente in den Trennwänden vorgesehene Durchbrüche oder Mulden oder zwischen den Trennwänden angeordnete Stromstörer, Prallstellen oder zusätzliche Leitbleche sind.

4. Abgasnachbehandlungssystem nach einem der Ansprüche 1 bis 3, **dadurch gekennzeichnet, dass** das Katalysatormaterial aus einem Katalysatorträgermaterial mit einer katalytisch chemischen Oberfläche oder Beschichtung besteht.

5. Abgasnachbehandlungssystem nach einem der Ansprüche 1 bis 3, **dadurch gekennzeichnet, dass** der Filter ein Partikelfilter ist.

6. Abgasnachbehandlungssystem nach Anspruch 4, **dadurch gekennzeichnet, dass** mehrere Kammern mit Katalysatoren zur selektiven katalytischen Reduktion hintereinander geschaltet sind.

7. Abgasnachbehandlungssystem nach Anspruch 5, **dadurch gekennzeichnet, dass** mehrere Kammern mit Filtern hintereinander geschaltet sind.

8. Abgasnachbehandlungssystem nach einem der vorhergehenden Ansprüche, **dadurch gekennzeichnet, dass** die Trennwände aus Metallblechen oder - folien oder Keramikelementen oder Kombinationen der vorgenannten Werkstoffe besteht.

9. Abgasnachbehandlungssystem nach einem der vorangehenden Ansprüche, **dadurch gekennzeichnet, dass** zuzätzlich mindestens ein Schalldämmelement integriert ist.

10. Abgasnachbehandlungssystem nach einem der vorangehenden Ansprüche, **dadurch gekennzeichnet, dass** es einen ersten Bereich enthält, in dem ein Oxidationskatalysator enthalten ist und einen zweiten Bereich, in dem ein Partikelfilter enthalten ist.

11. Abgasnachbehandlungssystem nach einem der Ansprüche 5 bis 10, **dadurch gekennzeichnet, dass** in dem Partikelfilter die Porösität der Wandungen, durch die das Abgas geführt wird, so gewählt ist, dass eventuell noch vorhandene Funkenteilchen abfiltriert werden.

12. Abgasnachbehandlungssystem nach einer Kombination der Ansprüche 4 und 5.
